(19) Europäisches Patentamt
European Patent Office
Office européen des brevets

(11) EP 2 321 233 B1

(12) EUROPÄISCHE PATENTSCHRIFT

(45) Veröffentlichungstag und Bekanntmachung des Hinweises auf die Patenterteilung:
**22.03.2017 Patentblatt 2017/12**

(21) Anmeldenummer: **09781290.3**

(22) Anmeldetag: **30.07.2009**

(51) Int Cl.:
***C04B 24/26*** *(2006.01)* ***C04B 28/14*** *(2006.01)*
***C04B 24/16*** *(2006.01)* ***C04B 24/24*** *(2006.01)*

(86) Internationale Anmeldenummer:
**PCT/EP2009/059871**

(87) Internationale Veröffentlichungsnummer:
**WO 2010/012804 (04.02.2010 Gazette 2010/05)**

# (54) DISPERGIERMITTEL FÜR GIPSZUSAMMENSETZUNGEN

DISPERSING AGENTS FOR GYPSUM PLASTER COMPOSITIONS

AGENT DE DISPERSION POUR COMPOSITIONS DE GYPSE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.07.2008 EP 08161423**

(43) Veröffentlichungstag der Anmeldung:
**18.05.2011 Patentblatt 2011/20**

(73) Patentinhaber: **Sika Technology AG**
**6340 Baar (CH)**

(72) Erfinder:
- **HAMPEL, Christina**
  **CH-8102 Oberengstringen (CH)**
- **SULSER, Ueli**
  **CH-8103 Unterengstringen (CH)**
- **AL SHEMARI, Jabbar**
  **CH-8052 Zürich (CH)**
- **ZIMMERMANN, Jörg**
  **CH-8046 Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**EP-A- 2 006 258**
**FR-A- 2 827 593**
**GB-A- 2 319 522**
**US-A1- 2006 280 970**
**US-A1- 2007 181 041**
**US-B1- 6 264 739**
**US-B1- 7 261 772**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 321 233 B1

## Beschreibung

### Technisches Gebiet

Die vorliegende Erfindung betrifft das Gebiet der Gipszusammensetzungen, insbesondere der Dispergiermittel für Gipszusammensetzungen.

### Stand der Technik

Polymere aus α- β-ungesättigten Carbonsäuren mit Polyalkylenglykol-Seitenketten werden bereits seit längerem in der Betontechnologie als Dispergiermittel, insbesondere als Verflüssiger, wegen ihrer starken Wasserreduktion eingesetzt. Diese Polymere haben eine Kammpolymerstruktur. Es gibt eine Reihe von solchen Kammpolymeren, welche neben Ester- und Carbonsäure-Gruppen auch Amidgruppen aufweisen.

Es hat sich nun gezeigt, dass die bekannten Betondispergiermittel nur bedingt für Gipszusammensetzungen eingesetzt werden können. Die bekannten Betondispergiermittel erreichen im Gips entweder nur eine relativ geringe Verflüssigung und müssen daher in hohen Dosierungen eingesetzt werden, oder sie verzögern so stark, dass die Gipszusammensetzung kaum noch abbindet.

Als Gipsverflüssiger wurden bisher beispielsweise Melamin-Sulfonsäure-Formaldehyd Kondensate eingesetzt. Diese Verflüssiger sind jedoch wegen der Freisetzung des toxischen Formaldehyds ökologisch problematisch und daher nicht erwünscht. Andere bekannte Gipsverflüssiger basieren auf Lignin- oder Naphthalinsulfonaten, wie beispielsweise in WO02081400A1 beschrieben. Solche Verflüssiger weisen den Nachteil auf, dass sich die damit hergestellten Gipszusammensetzungen verfärben. FR 2827593 offenbart die Verwendung von Polycarboxylatether in gipsbasierten Zusammensetzungen.

Insbesondere Dispergiermittel in Gipszusammensetzungen zur Herstellung von Gipsplatten erfordern bestimmte Eigenschaften, welche mit den herkömmlichen Gipsdispergiermitteln nicht erreicht werden.

### Darstellung der Erfindung

Aufgabe der vorliegenden Erfindung ist es daher, Dispergiermittel zur Verfügung zu stellen, bei denen die Nachteile des Standes der Technik überwunden werden, und welche geeignet sind, eine ausreichende Verflüssigungswirkung von Gipszusammensetzungen, insbesondere für die Herstellung von Gipsplatten, zu erzielen ohne zu stark zu verzögern.

Überraschenderweise wurde gefunden, dass dies durch die Verwendung eines Polymers **P** gemäss Anspruch 1 erreicht werden kann. Es konnte nun überraschend festgestellt werden, dass mit Polymeren, welche lange Seitenketten mit einem Molekulargewicht von mindestens 1800 g/mol und einen Säuregehalt von 1.8 bis 2.7 mmol Säuregruppen pro 1 g Polymer aufweisen, eine besonders gute Verflüssigungswirkung in Gipszusammensetzungen erreicht werden kann. Weiterhin hat sich gezeigt, dass diese Polymere zur Wasserreduktion von Gipszusammensetzungen eingesetzt werden können und dass sie das Abbinden nicht stark verzögern. Ebenfalls sind mit diesen Polymeren Zusammensetzungen möglich, die sich nicht verfärben.

Die Erfindung umfasst zudem die Verwendung von Gipszusammensetzungen umfassend mindestens ein Polymer P und vorzugsweise Calciumsulfat-β-Halbhydrat für die Herstellung von Gipsplatten. Weitere vorteilhafte Ausgestaltungen der Erfindung ergeben sich aus den Unteransprüchen.

### Wege zur Ausführung der Erfindung

Die vorliegende Erfindung betrifft die Verwendung eines Polymers P als Dispergiermittel für Gipszusammensetzungen, insbesondere für die Herstellung von Gipsplatten.

Das Dispergiermittel kann insbesondere verwendet werden als Verflüssiger, als Wasserreduzierer oder zur Verbesserung der Verarbeitbarkeit und der Fliessfähigkeit der damit hergestellten Gipszusammensetzungen. Solche Gipszusammensetzungen sind besonders geeignet für die Herstellung von Gipsplatten. Unter Gipsplatten werden beispielsweise Gipskartonplatten, bei denen ein Gipskern zwischen zwei Kartonplatten eingeschlossen ist, Gipsfaserplatten, welche zusätzlich Fasern enthalten, sowie Gipswandplatten, welche üblicherweise in eine Form gegossen werden, verstanden. Besonders geeignet sind die erfindungsgemässen Gipszusammensetzungen für Gipskartonplatten, bei denen ein Gipskern umfassend oder bestehend aus Calciumsulfat-β-Halbhydrat und mindestens einem Polymer P zwischen Kartonplatten eingeschlossen ist.

In einer besonders bevorzugten Verwendung wird das Polymer **P** als Verflüssiger für solche Gipszusammensetzungen verwendet.

Unter "Gipszusammensetzung" wird eine Zusammensetzung verstanden, welche mindestens 30 Gew.-%, bevorzugt mindestens 50 Gew.-%, noch mehr bevorzugt mindestens 70 Gew.-%, oder 100 Gew.-% Gips enthält, bezogen auf das Gesamtgewicht des Bindemittels. Bei einer bevorzugten Anwendung ist die Gipszusammensetzung zementfrei. Als Gipszusammensetzungen werden insbesondere Zusammensetzungen verstanden, welche überwiegend sulfatische Bindemittel enthalten.

Zum Term "Gips" wird jede bekannte Form von Gips gezählt, insbesondere Calciumsulfat-Dihydrat, Calciumsulfat-α-Halbhydrat, Calciumsulfat-β-Halbhydrat oder Calciumsulfat-Anhydrit oder Mischungen davon.

In einer bevorzugten Ausführungsform ist Gips Calciumsulfat-β-Halbhydrat und die Gipszusammensetzungen auf Basis von Calciumsulfat-β-Halbhydrat werden zur Herstellung von Gipsplatten verwendet. Vorzugsweise umfasst die Gipszusammensetzung mindestens 70 Gew.-% Calciumsulfat-β-Halbhydrat, noch mehr bevorzugt mindestens 90 Gew.-% Calciumsulfat-β-Halbhydrat, bezogen auf das Gesamtgewicht des Bindemittels.

Unter den Begriff "Bindemittel" fallen neben Gips weitere hydraulisch abbindende Substanzen, wie beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.

Das Polymer **P**, welches sich erfindungsgemäss besonders zur Verwendung als Dispergiermittel, insbesondere als Verflüssiger, für Gipszusammensetzungen eignet, umfasst

a) eine Hauptkette enthaltend Kohlenwasserstoffgruppen,
b) mindestens eine Seitenkette umfassend mindestens eine Säuregruppe, ausgewählt aus der Gruppe bestehend aus Carbonsäuregruppe, Sulfonsäuregruppe, Phosphonsäuregruppe, Phosphorsäuregruppe oder ein Salz davon, und
c) mindestens eine Seitenkette mit einem Molekulargewicht $M_w$ von mindestens 1800 g/mol umfassend mindestens eine Polyoxyalkylengruppe, wobei die Polyoxyalkylengruppe über ein Verbindungsstück, welches mindestens eine Ester-, Amid- oder Imidgruppe, vorzugsweise mindestens eine Ester- oder Amidgruppe, umfasst, an die Hauptkette gebunden ist;

wobei der Säuregehalt des Polymers **P** 1.8 bis 2.7 mmol Säuregruppen pro 1 g Polymer beträgt.

Unter 'Molekulargewicht' oder 'Molgewicht' versteht man im Sinne der Erfindung das Molekulargewichtsmittel $M_w$.

Unter "(Meth)acrylsäure" wird im gesamten vorliegenden Dokument sowohl Acrylsäure als auch Methacrylsäure oder Mischungen davon verstanden.

Unter dem Begriff "Hauptkette enthaltend Kohlenwasserstoffgruppen" wird eine Verbindung verstanden, welche Kohlenstoffatome und Wasserstoffatome enthält. Die Kohlenwasserstoffgruppen können gesättigt oder ungesättigt sein, aliphatische, aromatische, Arylaklyl-, Alkylaryl-, lineare oder verzweigte Gruppen enthalten oder daraus bestehen. Diese Hauptkette enthaltend Kohlenwasserstoffgruppen kann beispielsweise durch radikalische Polymerisation hergestellt werden und daher je nach verwendetem Initiatorsystem und gegebenenfalls Molekulargewichtsregler an den Enden oder in der Kette eines oder mehrere Heteroatome wie beispielsweise S, O, N, P enthalten. Die Hauptkette kann aufgebaut sein aus gleichen oder unterschiedlichen Kohlenwasserstoffgruppen oder -einheiten, die abwechselnd, blockartig oder zufällig gereiht sein können. Beispiele für eine Hauptkette enthaltend Kohlenwasserstoffgruppen sind Kohlenwasserstoffketten, wie sie beispielsweise durch Polymerisation von (Meth)acrylsäure oder deren Derivaten oder durch Copolymerisation von Acrylsäure mit Methacrylsäure oder deren Derivaten oder durch Copolymerisation von Maleinsäure bzw. deren Derivaten mit Vinyl- oder Allylverbindungen entstehen, wenn man die Seitenketten, die keine reinen Kohlenwasserstoffgruppen sind, beispielsweise Säure-, Ester-, Ether- oder Amidgruppen, von der Kette entfernt. Am meisten bevorzugt ist eine Kohlenwasserstoffkette, wie sie durch Polymerisation von Acrylsäure entstanden ist.

Unter dem Begriff "Seitenkette umfassend mindestens eine Säuregruppe oder ein Salz davon" wird eine Verbindung verstanden, welche mindestens eine Carbonsäuregruppe, Sulfonsäuregruppe, Phosphonsäuregruppe, Phosphorsäuregruppe oder ein Salz davon enthält. Die Säuregruppe kann gar nicht, teilweise oder vollständig neutralisiert sein und als Salz oder Anhydrid vorliegen. Vorzugsweise ist die Säuregruppe eine Carbonsäuregruppe.

Die Seitenkette mit einem Molekulargewicht $M_w$ von mindestens 1800 g/mol umfasst mindestens eine Polyoxyalkylengruppe. Die Polyoxyalkylengruppe ist vorzugsweise über ein Verbindungsstück, welches mindestens eine Ester-, Amid- oder Imidgruppe umfasst, an die Hauptkette gebunden. Das Molekulargewicht der mindestens einen Seitenkette umfassend mindestens eine Polyoxyalkylengruppe ist mindestens 1800 g/mol, vorzugsweise 2000 g/mol, noch mehr bevorzugt mindestens 3000 g/mol.

Das Verbindungsstück umfasst mindestens eine Ester-, Amid- oder Imidgruppe, vorzugsweise eine Ester- oder Amidgruppe, vorzugsweise ausgewählt aus der Gruppe bestehend aus -COO-, -CO-NH-, -R'-COO-, und-R-CO-NH-, wobei R' unabhängig voneinander für einen $C_1$ - $C_6$ Alkylenrest steht. Das Polymer **P** kann verschiedene Seitenketten umfassen welche mindestens eine Polyoxyalkylengruppe umfassen, und welche über verschiedene Verbindungsstücke an die Hauptkette gebunden sind. Beispielsweise kann das Polymer **P** Seitenketten umfassen, welche über eine Ester-, Amid- oder Imidgruppe oder Mischungen davon an die Hauptkette gebunden sind. In einem Polymer **P** können also

Ester-, Amid- oder Imid-Verbindungsstücke gemischt vorkommen. Beispielsweise kann bei einem Polymer **P** ein Teil der Seitenketten umfassend mindestens eine Polyoxyalkylengruppe über eine Estergruppe und ein anderer Teil der Seitenketten umfassend mindestens eine Polyoxyalkylengruppe über eine Amidgruppe an die Hauptkette gebunden sein.

Die Polyoxyalkylengruppe enthält oder besteht vorzugsweise aus Polyoxyethylengruppen, Polyoxypropylengruppen oder Mischungen von Oxyethylen- und Oxypropylengruppen.

Um die erfindungsgemässe Wirkung zu erzielen, muss das Polymer **P** mindestens eine lange Seitenkette mit einem Molekulargewicht $M_w$ von mindestens 1800 g/mol sowie einen bestimmten Säuregehalt (**SG**) von 1.8 bis 2.7 mmol Säuregruppen pro 1 g Polymer enthalten. Der Säuregehalt des Polymers **P** wird durch die Summe der freien Säuregruppen und deren Salze in mmol, welche in 1 g Polymer **P** enthalten ist, angegeben. Als Säuregruppen werden alle Gruppen verstanden, welche eine Säure oder deren Salz enthält. Die Säuregruppe kann also auch teilweise oder vollständig neutralisiert sein. Der Säuregehalt **SG** in mmol/g Polymer berechnet sich nach der Formel $\left(\frac{z*m}{(M_{WA}*m+M_{WB}*n+M_{WC}*o)}\right)*1000$, wobei z der Zahl der Protonen entspricht, welche die Säureeinheit **A** der Formel (I) abzugeben vermag. So ist beispielsweise im Falle einer Monocarbonsäure z = 1 und z = 2, falls es sich bei der Säureeinheit **A** der Formel (I) um eine Dicarbonsäure handelt. $M_w$ ist das Molekulargewicht der Säure- oder Struktureinheit(en), z.B. $M_{WA}$ = 72 g/mol, falls es sich bei der Säureeinheit **A** der Formel (I) um eine Acrylsäure handelt. Bei den Indizes m, n und o handelt es sich um Angaben in Mol%, so beschreibt m den Anteil der Säureeinheit **A** der Formel (I) in Mol% am Polymer **P**, n den Anteil der Struktureinheit **B** der Formel (II) in Mol% am Polymer **P** und o den Anteil der gegebenenfalls umfassten Struktureinheit **C** in Mol% am Polymer **P**.

Das Polymer **P** umfasst

a) mindestens eine Säureeinheit **A** der Formel (I);

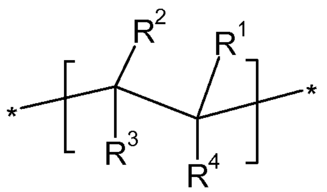

(I)

b) mindestens eine Struktureinheit B der Formel (II);

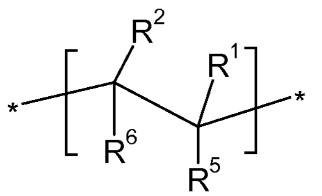

(II)

und gegebenenfalls

c) mindestens eine weitere Struktureinheit **C**.

Dabei stehen unabhängig voneinander $R^1$ und $R^2$ für H, COOM, $CH_2COOM$ oder eine Alkylgruppe mit 1 bis 5 Kohlenstoffatomen, insbesondere für H; $R^3$ steht unabhängig voneinander für H, $CH_3$, COOM oder $CH_2COOM$, insbesondere für H; und $R^4$ steht unabhängig voneinander für einen Rest der Carbonsäure, Sulfonsäure, Methylsulfonsäure, Arylsulfonsäure, Carbonylamidomethylpropansulfonsäure, Phosphorsäure oder Phosphonsäure oder deren Salze. $R^4$ steht insbesondere für COOM; oder $R^3$ kann mit $R^4$ einen Ring bilden zu -CO-O-CO-.

M bedeutet H, Alkalimetall, Erdalkalimetall oder andere zwei- oder dreiwertige Metallatome, Ammonium, Alkyl-Ammonium, oder eine Mischung davon. M kann insbesondere H, Na, Ca/2, Mg/2, $NH_4$ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber $HR_3N$, wobei R eine Alkylgruppe insbesondere eine $C_1$- bis $C_6$-Alkylgruppe, bevorzugt Ethyl oder Butyl, darstellt. Ammoniumionen werden insbesondere durch die Neutralisation der Carboxylgruppe mit handelsüblichen tertiären Aminen erhalten.

Beispiele für geeignete Säureeinheiten **A** sind Einheiten, die durch Polymerisation entstehen von Acrylsäure, Methacrylsäure, Mesaconsäure, Citraconsäure, Glutactonsäure, Fumarsäure, Maleinsäure, Maleaminsäure, Itaconsäure, Vinylbenzoesäure, Crotonsäure, Vinylsulfonsäure, Allylsulfonsäure, Methallylsulfonsäure, 2-Acrylamido-2-methylpropansulfonsäure oder Vinylphosphonsäure, oder Derivate oder Analoga davon, wie beispielsweise das Maleinsäurehalbamid aus Maleinsäure und Sulfanilsäure, insbesondere das N-(4-Sulfophenyl)maleinsäureamid. Bevorzugt sind Monocarbonsäuren. Insbesondere geeignet als Säureeinheit **A** ist eine Einheit, entstanden durch Polymerisation einer Acrylsäureeinheit oder ein Salz davon.

Vorzugsweise ist die mindestens eine Säureeinheit **A** der Formel (I) teilweise oder vollständig neutralisiert. Die Säureeinheit kann als freie Säure oder auch als Salz oder Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Besonders bevorzugt ist ein Polymer **P**, bei dem $R^1$, $R^2$ und $R^3$ für H, $R^4$ für COOM und M für H oder ein Alkali- oder Erdalkalimetall stehen. Die Säureeinheit **A** der Formel (I) stellt somit vorzugsweise eine Acrylsäureeinheit oder Salze davon dar.

$R^6$ steht unabhängig voneinander für H, $CH_3$, COOM oder $CH_2COOM$ oder einen Substituenten wie für $R^5$ definiert, vorzugsweise für H.

$R^5$ steht unabhängig voneinander für einen Rest der Formel (III)

$$-(CH_2)_x - R^7 - (R^8O)_y - R^9 \qquad \text{(III)}$$

Dabei steht $R^7$ für ein Ester-, Amid oder Imid-Verbindungsstück, vorzugsweise für -COO- oder -CO-NH-. $R^8$ steht für eine $C_2$ - $C_6$ Alkylengruppe, vorzugsweise eine $C_2$ - $C_4$ Alkylengruppe oder eine Mischung von $C_2$, $C_3$ und/oder $C_4$ Alkylengruppen in einer beliebigen Reihenfolge; und $R^9$ steht für H, einen $C_1$ - $C_{12}$ Alkyl- oder Cycloalkylrest, einen $C_7$ - $C_{20}$ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst.

Der Index x weist unabhängig voneinander den Wert 0 oder 1 auf; und y steht unabhängig voneinander für den Wert 40 - 250, vorzugsweise für 60 bis 120.

In einer bevorzugten Ausführungsform steht $R^5$ für -COO-$(R^8O)_y$-$R^9$ oder -CO-NH-$(R^8O)_y$-$R^9$, insbesondere für -COO-$(R^8O)_y$-$R^9$, und -$(R^8O)_y$-steht für eine $C_2$ - $C_4$ Polyoxyalkylengruppe, insbesondere für eine Polyoxyethylengruppe oder eine Polyoxypropylengruppe oder Mischungen von Oxyethylen- und Oxypropyleneinheiten in irgendeiner möglichen Sequenz, beispielsweise zufällig, alternierend oder blockweise, und y steht für 40 bis 250, bevorzugt für 45 bis 120. Bei einem bevorzugten Polymer **P** sind mindestens 30 Mol-%, besonders bevorzugt 50 - 100 Mol-%, noch mehr bevorzugt 80 - 100 Mol-%, am meisten bevorzugt 100 Mol-% der Struktureinheit **B** der Formel (II) durch eine Struktur dargestellt bei der $R^8$ eine $C_2$-Alkylengruppe darstellt. Das heisst, $R^5$ umfasst vorzugsweise mindestens 30 Mol-% $(C_2H_4O)$-Einheiten, vorzugsweise 50 bis 100 Mol-% $(C_2H_4O)$-Einheiten, noch mehr bevorzugt 80 bis 100 Mol-% $(C_2H_4O)$-Einheiten, bezogen auf die Gesamtmolmenge aller $(R^8O)$-Einheiten. Insbesondere bevorzugt umfasst $R^5$ 100 Mol-% $(C_2H_4O)$-Einheiten, bezogen auf die Gesamtmolmenge aller $(R^8O)$-Einheiten. $R^9$ kann je nach Herstellverfahren des Polymers **P** für H, einen $C_1$ - $C_{12}$ Alkyl- oder Cycloalkylrest, einen $C_7$ - $C_{20}$ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, stehen. Wird das Polymer **P** über die polymeranaloge Reaktion hergestellt, ist $R^9$ vorzugsweise ein Methylrest, und steht nicht für ein Wasserstoffatom.

Die weitere Struktureinheit **C** kann eine weitere Ether-, Ester, Amid- oder Imideinheit, vorzugsweise eine Amid- oder Estereinheit umfassen. Beispielsweise kann die weitere Struktureinheit **C** Carbonsäure-, Sulfonsäure-, Phosphorsäureester-, Phosphonsäure-, Carbonylamidomethylpropansulfonsäure und deren Alkali oder Erdalkalisalze, Poly(oxyalkylen)oxycarbonyl, Poly(oxyalkylen)aminocarbonyl, Poly(oxyalkylen)oxyalkyl-, Poly(oxyalkylen)oxy-, Hydroxyethyloxycarbonyl-, Acetoxy-, Phenyl- oder *N*-Pyrrolidonylgruppen umfassen. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit **C** eine Estereinheit sein, welche durch Umsetzung einer Mono- oder Dicarbonsäure mit einem Alkylalkohol, insbesondere einem $C_6$-$C_{20}$ Alkylalkohol hergestellt wird.

Es hat sich gezeigt, dass eine überraschend gute Verflüssigungswirkung in Gipszusammensetzungen erzielt wird, wenn das Polymer **P** lange Seitenketten mit einem Molekulargewicht von mindestens 1800 g/mol und einen Säuregehalt von 1.8 bis 2.7 mmol Säuregruppen pro 1 g Polymer aufweist.

Ein besonders bevorzugtes Polmyer **P** umfasst oder besteht aus

a) mindestens einer Säureeinheit **A** der Formel (I');

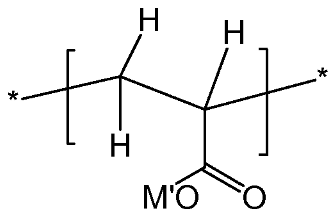

(I')

und

b) mindestens einer Struktureinheit B der Formel (II');

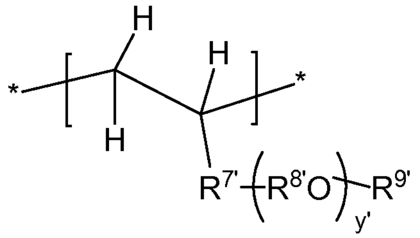

(II')

wobei M' ein H, Na, Ca/2, Mg/2, $NH_4$ oder ein organisches Ammonium, vorzugsweise ein H darstellt,
wobei $R^7$ für COO oder CONH steht,
wobei $R^{8'}$ für eine Ethylengruppe steht,
wobei $R^{9'}$ für eine $C_1$ bis $C_{12}$ Alkylgruppe, vorzugsweise eine Methylgruppe steht,
wobei y' für 40 - 250, vorzugsweise 60 bis 100 steht,
und wobei der Säuregehalt 1.8 bis 2.7 mmol COOM'-gruppen pro 1 g Polymer beträgt.

Das Polymer **P** kann eine Kombination von verschiedenen Struktureinheiten der jeweiligen Struktureinheiten von **A**, **B**, und gegebenenfalls **C** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Bevorzugt sind aber reine Acrylsäureeinheiten. Oder es können mehrere unterschiedliche Ester- oder Amideinheiten **B** gemischt im Polymer **P** vorkommen, so zum Beispiel mehrere Estereinheiten **B** mit verschiedenen Substituenten $R^{8'}$. Bevorzugt ist beispielsweise die gemeinsame Verwendung von Polyalkylenglykolen, insbesondere von Polyethylenglykolen mit Polypropylenglykolen, oder die gemeinsame Verwendung von Polyalkylenglykolen, insbesondere von Polyethylenglykolen, mit unterschiedlichem Molekulargewicht.

In einer bevorzugten Ausführungsform umfasst das Polymer **P** 50 bis 99.5 Mol-%, vorzugsweise 70 bis 99 Mol-% der Säureeinheit **A** der Formel (I), 0.5 bis 50 Mol-%, vorzugsweise 1 bis 30 Mol-% der Struktureinheit **B** der Formel (II), und gegebenenfalls 0 bis 49 Mol-% der Struktureinheit **C**, jeweils bezogen auf die Gesamtmolmenge der Struktureinheiten von **A**, **B und C** im Polymer **P**. Vorzugsweise handelt es sich bei der Säureeinheit **A** der Formel (I) um eine Säureeinheit der Formel (I'), bei der Struktureinheit **B** der Formel (II) um eine Struktureinheit der Formel (II') und bei der Struktureinheit **C** der Formel (III) um eine Struktureinheit der Formel (III').

Besonders bevorzugt umfasst das Polymer **P** 75 bis 98 Mol-%, noch mehr bevorzugt 85 bis 98 Mol-%, der Säureeinheit **A** der Formel (I), 2 bis 25 Mol-%, noch mehr bevorzugt 2 bis 15 Mol-%, der Struktureinheit **B** der Formel (II), und gegebenenfalls 0 bis 23 Mol-% der Struktureinheit **C**, jeweils bezogen auf die Gesamtmolmenge der Struktureinheiten von **A**, **B und C** im Polymer **P**. Vorzugsweise handelt es sich bei der Säureeinheit **A** der Formel (I) um eine Säureeinheit der Formel (I'), bei der Struktureinheit **B** der Formel (II) um eine Struktureinheit der Formel (II') und bei der Struktureinheit **C** der Formel (III) um eine Struktureinheit der Formel (III').

Die Abfolge der einzelnen Struktureinheiten **A**, **B**, und **C** im Polymer **P** kann alternierend, statistisch, blockweise oder zufällig sein.

Das Polymer **P** weist vorzugsweise ein Molekulargewicht $M_w$ im Bereich von 10'000 - 150'000 g/mol, vorzugsweise 15'000 - 100'000 g/mol, besonders bevorzugt 25'000-80'000 g/mol, auf.

Das Polymer **P** wird in einer sogenannten polymeranalogen Umsetzung aus einem Polycarboxylat und den jeweiligen Alkoholen und/oder Aminen hergestellt.

Die polymeranaloge Umsetzung weist den grossen Vorteil auf, dass aus kommerziell erhältlichen Polymeren aus $\alpha$-,$\beta$-ungesättigten Säuren, insbesondere aus Mono- oder Dicarbonsäuren, speziell aus Poly(meth)acrylsäuren, durch Variation der Menge, der Art und dem Verhältnis von Alkohol und Amin, in einfacher und sicherer Weise sehr unterschiedliche Kammpolymere mit sehr unterschiedlichen Eigenschaften erhalten werden können. Solche polymeranalogen Umsetzungen sind beispielsweise in WO97/35814A1, WO95/09821A2, DE 100 15 135A1, EP 1138697A1,

EP1348729A1 sowie WO2005/090416A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polymer **P** kann auch in festem Aggregatszustand erhalten werden, wie in EP 1 348 729 A1 auf Seite 3 bis Seite 5 sowie in dessen Beispielen beschrieben.

Es wird also ein Polymer **P** verwendet, wobei das Polymer **P** erhältlich ist durch die Reaktion von (a) mindestens einer Polycarbonsäure oder einem Analogon einer Polycarbonsäure; und (b) mindestens einer Monohydroxyverbindung **E** und/oder mindestens einer Monoaminverbindung **F** umfassend mindestens eine Polyoxyalkylengruppe, und gegebenenfalls (c) mindestens eine weitere Verbindung **D**.

Unter Polycarbonsäure oder Analogon einer Polycarbonsäure versteht man ein Homo- oder Copolymer, welches durch Polymerisation von mindestens einem Monomer **a** und gegebenenfalls mindestens einem Monomer **b** erhalten werden kann. Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Unter Analogon einer Mono- oder Dicarbonsäure oder Polycarbonsäure versteht man im Sinne der vorliegenden Erfindung Säuresalze, Säurehalogenide, Säureanhydride und Säureester, im besonderen Alkyl-Säureester.

Monomer **b** ist vorzugsweise ausgewählt aus der Gruppe von ethylenisch ungesättigten Monomeren umfassend $\alpha$- $\beta$-ungesättigte Mono- oder Dicarbonsäuren, $\alpha$- $\beta$-ungesättigte Mono- oder Dicarbonsäureester, $\alpha$- $\beta$-ungesättigte Carboxylate, Styrol, Ethylen, Propylen, Vinylacetat insbesondere Methacrylsäure, Acrylsäure, Crotonsäure, Itaconsäure, Maleinsäure, Fumarsäure, sowie deren Salze, Ester und Mischungen davon.

Bevorzugt als Copolymer ist ein Copolymer aus Acrylsäure und Methacrylsäure sowie deren Salze oder Teilsalze.

Bevorzugt als Homopolymer ist Polyacrylsäure, deren Salze oder Teilsalze.

Die Polycarbonsäure oder das Analogon der Polycarbonsäure kann hierbei als freie Säure oder als Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Bei der Herstellung der Polycarbonsäure oder des Analogons der Polycarbonsäure sind allenfalls verwendete Initiatoren, CoInitiatoren und Polymerisationsregler gegebenenfalls so zu wählen, dass in Polymer **P** vorzugsweise keine reaktionsfähigen Hydroxyl- oder Aminfunktionen vorhanden sind.

Unter "Monohydroxy-Verbindung" wird hier und im folgenden eine Substanz verstanden, die nur eine freie Hydroxylgruppe aufweist.

Unter "Monoamin-Verbindung" wird hier und im folgenden eine Substanz verstanden, die nur eine freie Aminogruppe aufweist.

Das Homo- oder Copolymer der Polycarbonsäure oder des Anologons der Polycarbonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Die Polymerisation erfolgt vorteilhaft unter derartigen Bedingungen, dass das gebildeten Homo- oder Copolymere aus 10 bis 250, bevorzugt 20 bis 100, mehr bevorzugt 25 bis 60, Monomerbausteinen aufgebaut ist. Solche Homo- oder Copolymere von (Meth)acrylsäure sind kommerziell erhältlich. Das Homo- oder Copolymer der Polycarbonsäure oder des Anologons der Polycarbonsäure weist vorzugsweise ein Molekulargewicht $M_w$ von 500 bis 20'000 g/mol, bevorzugt von 2'000 bis 10'000 g/mol, insbesondere bevorzugt von 3'500 bis 6'500 g/mol, auf.

Die Monohydroxy-Verbindung **E** ist vorzugsweise mit unter üblichen Reaktionsbedingungen nicht reaktiven Endgruppen einseitig abgeschlossen. Bevorzugt handelt es sich hierbei um ein Polymer mit einem Polyalkylenglykol-Grundgerüst. Die Monohydroxy-Verbindung **E** weist die Formel (IV) auf

$$HO\text{-}(R^{8''}O)_{y''}\text{-}R^{9''} \qquad (IV)$$

wobei $R^{8''}$ unabhängig voneinander eine $C_2$ - $C_4$ Alkylengruppe bedeutet mit einer Reihenfolge der ($R^{8''}O$)-Einheiten in irgendeiner möglichen Sequenz; wobei $R^{9''}$ für einen $C_1$ - $C_{12}$ Alkyl- oder Cycloalkylrest, einen $C_7$ - $C_{20}$ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei y" unabhängig voneinander für 40 - 250, vorzugsweise 45 bis 120 steht.

Bevorzugt sind Monohydroxy-Verbindungen **E** der Formel (IV) mit einer Methyl-, Ethyl-, i-Propyl- oder n-Butylgruppe, insbesondere mit einer Methylgruppe, als Substituent R9'. Vorzugsweise steht $R^8$ unabhängig voneinander für eine $C_2$-Alkylengruppe und/oder eine $C_3$-Alkylengruppe. Bevorzugt handelt es sich bei **E** um Mischpolymerisate aus Ethylenoxid/Propylenoxid, mehr bevorzugt um einseitig endgruppenverschlossenes Polyethylenglykol.

Mischungen mehrerer unterschiedlicher Verbindungen der Gruppe **E** sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymeren aus Ethylenoxid und Propylenoxid oder einseitig endgruppenverschlossenen Polypropylenglykolen verwendet werden.

Unter ‚mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei ‚einseitig abgeschlossen' Verbindungen ist nur eine Seite nicht mehr zur Reaktion fähig.

In einer bevorzugten Ausführungsform ist die Monohydroxy-Verbindung **E** ein einseitig endgruppenverschlossenes Polyalkylenglykol mit einem Molekulargewicht $M_w$ von 1800 bis 10'000 g/mol, insbesondere von 2000 bis 8000 g/mol, bevorzugt von 2000 bis 6000 g/mol. Geeignet ist auch eine Mischung von einseitig endgruppenverschlossenen Polyalkylenglykolen mit unterschiedlichem Molekulargewicht, beispielsweise die Mischung von Polyalkylenglykolen mit einem Molekulargewicht von 1'000 g/mol mit Polyalkylenglykolen mit einem Molekulargewicht von 5'000 g/mol.

Zusätzlich zur Monohydroxy-Verbindung **E** oder anstelle der Monohydroxy-Verbindung **E** kann im ersten Verfahren eine Monoaminverbindung **F** eingesetzt werden. Dadurch erfolgt die Bildung von Amidgruppen.

Typische Beispiele solcher Monoaminverbindungen **F** lassen sich durch die Formel (V) darstellen

$$NH_2\text{-}(R^8O)_y\text{-}R^9 \qquad (V)$$

Die Substituenten $R^8$ und $R^9$ beziehungsweise der Index y weisen unabhängig voneinander dieselben Bedeutungen auf wie sie bereits für die Formel (III) definiert wurden.

Beispiele für solche Monoaminverbindungen **F** sind α-Methoxy-ω-Amino-Polyoxyethylen, α-Methoxy-ω-Amino-Polyoxypropylen, α-Methoxy-ω-Amino-Oxyethylene-Oxypropylen-Copolymer.

Besonderes bevorzugt als Monoaminverbindungen **F** sind α-Methoxy-ω-Amino-Oxyethylen-Oxypropylen-Copolymere, wie beispielsweise Jeffamin® M-2070, oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/oder Propylenoxid gefolgt von Umwandlung der terminalen Alkoholgruppe in eine Amingruppe

Als weitere Verbindung **D** ist eine Verbindung bevorzugt, welche mit der Polycarbonsäure oder dem Analogon der Polycarbonsäure eine Reaktion eingehen kann. Beispiele für eine Verbindung **D** sind weitere Amine oder Alkohole, beispielsweise ein $C_6$-$C_{20}$ Alkylalkohol oder ein weiteres Mono- oder Diamin. Es können auch mehrere verschiedene Verbindungen **D** eingesetzt werden.

Die Umsetzung der Polycarbonsäure oder dem Analogon der Polycarbonsäure mit mindestens einer Monohydroxy-Verbindung **E** und/oder mit mindestens einer Monoaminverbindung **F**, und gegebenenfalls einer Verbindung **D** zu einem Polymer **P** erfolgt bei der polymeranalogen Reaktion typischerweise derart, dass zur Polycarbonsäure oder dem Analogon der Polycarbonsäure unter Rühren die mindestens eine Monohydroxy-Verbindung **E** und/oder die mindestens eine Monoaminverbindung **F** zugegeben wird und auf die Umsetzungstemperatur aufgeheizt wird. Die Mischung wird weitergerührt und eventuell unter Vakuum oder durch Über- oder Durchleiten eines Gasstromes über beziehungsweise durch die Reaktionsmasse umgesetzt. Die Temperatur für diese Umsetzung ist beispielsweise zwischen 140°C und 200°C. Die Reaktion ist aber auch bei Temperaturen zwischen 150°C und 175°C möglich. Falls zusätzlich zur Monohydroxy-Verbindung **E** eine Monoaminverbindung **F** eingesetzt wird, kann deren Zugabe gleichzeitig mit der Monohydroxy-Verbindung **E** oder aber zu einem späteren Zeitpunkt während dieses Reaktionsschrittes erfolgen.

In einer bevorzugten Ausführungsform wird diese Umsetzung in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.

Die Umsetzung kann mittels Messung der Säurezahl, beispielsweise durch Titration, verfolgt werden und bei einer gewünschten Säurezahl, so dass der gewünschte Säuregehalt erreicht wird, abgebrochen werden. Die Reaktion wird durch Aufheben des Vakuums und Abkühlen abgebrochen.

In einer bevorzugten Ausführungsform wird eine Polyacrylsäure mit einem Polyethylenglykol welches einseitig mit einer Methylgruppe abgeschlossen ist, verestert und/oder mit einem Monoamin umgesetzt.

Bei der sogenannten polymeranalogen Reaktion können neben Estergruppen und gegebenenfalls Amidgruppen auch Anhydridgruppen gebildet werden, welche in einem zweiten Schritt vollständig oder teilweise mit einer Aminverbindung zu einem Amid umgesetzt werden können. Solche Verfahren werden beispielsweise in WO2005/090416A1 beschrieben.

Das Polymer **P** kann zur erfindungsgemässen Verwendung sowohl in flüssiger als auch in fester Form, sowohl allein oder als Bestandteil eines Dispergiermittels, insbesondere eines Verflüssigers verwendet werden.

Das Polymere **P** kann somit für die erfindungsgemässe Verwendung als Dispergiermittel für Gipszusammensetzungen als einfaches Polymer **P** oder als Mischungen mehrerer Polymere **P** verwendet werden. Es können aber auch Polymere **P** mit anderen Dispergiermitteln oder Dispergiermittelmischungen verwendet werden. Die Polymere **P** oder Mischungen, die die Polymere **P** enthalten, können zur erfindungsgemässen Verwendung weitere Bestandteile enthalten. Beispiele für weitere Bestandteile sind Lösungsmittel oder Additive, wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner.

Je nach Herstellverfahren oder Reaktionsführung kann das Dispergiermittel zudem zusätzlich zum Polymer **P** freie Verbindungen der Ausgangsstoffe, insbesondere freie Monohydroxyverbindungen wie beispielsweise Polyalkylenglykol, insbesondere freies Polyethylenglykol, enthalten.

Falls das Polymer **P** in flüssiger Form verwendet wird, wird für die Umsetzung vorzugsweise ein Lösungsmittel eingesetzt. Bevorzugte Lösungsmittel sind beispielsweise Alkohole, insbesondere Ethanol oder Isopropanol, und Wasser, wobei Wasser das am meist bevorzugte Lösungsmittel ist.

Das Polymer **P** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen.

Das Polymer **P** wird bevorzugt in einer Menge von 0.01 bis 10 Gew.-% bezogen auf das Gewicht des Bindemittels verwendet, um in der Gipszusammensetzung die gewünschte Wirkung zu erzielen. Es können auch mehrere Polymere **P** gemischt verwendet werden, um die gewünschte Wirkung zu erzielen.

In einem weiteren Aspekt betrifft die vorliegende Erfindung ein Bindemittel enthaltendes Gemisch umfassend Gips und mindestens ein Polymer **P**. Das Polymer **P** wurde bereits vorgängig beschrieben.

Zum Term "Gips" wird jede bekannte Form von Gips gezählt, insbesondere Calciumsulfat-Dihydrat, Calciumsulfat-α-Halbhydrat, Calciumsulfat-β-Halbhydrat oder Calciumsulfat-Anhydrit. Besonders geeignet ist das Polymer **P** zur Verwendung in einem Bindemittel enthaltenden Gemisch umfassend Calciumsulfat-β-Halbhydrat zur Verwendung in Gipsplatten, insbesondere für Gipskartonplatten.

Das Bindemittel enthaltende Gemisch enthält mindestens 30 Gew.-%, bevorzugt mindestens 50 Gew.-%, am meisten bevorzugt mindestens 70 Gew.-%, Gips, insbesondere Calciumsulfat-β-Halbhydrat, bezogen auf das Gesamtgewicht des Bindemittels. Das Bindemittel kann weitere hydraulisch abbindende Substanzen enthalten, wie beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.

Weiterhin kann das Gemisch weitere Zusätze, wie beispielsweise Fasern, sowie als Additive übliche Bestandteile wie beispielsweise andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Stärke, Zucker, Silikone, Schwindreduzierer, Entschäumer, oder Schaumbildner enthalten.

Besonders bevorzugt ist ein Bindemittel enthaltendes Gemisch umfassend ein Polymer **P**, Calciumsulfat-β-Halbhydrat und mindestens einen Beschleuniger, sowie weitere Zusätze wie sie für die Herstellung einer Gipsplatte üblich sind.

In einem weiteren Aspekt betrifft die vorliegende Erfindung ein Verfahren zur Herstellung eines Bindemittels enthaltenden Gemisches wobei das mindestens eine Polymer **P** getrennt oder als Zusatzmittel vorgemischt in fester oder flüssiger Form dem Bindemittel zugegeben wird.

Das Polymer **P** kann im festen Aggregatszustand ein Bestandteil einer Gipszusammensetzung, einer sogenannten Trockenmischung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Polymer **P** kann auch einer üblichen Gipszusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers. Die Herstellung der wässrigen Lösung oder Dispersion erfolgt durch Zusetzen von Wasser bei der Herstellung des Polymers **P** oder durch nachträgliches Vermengen von Polymer **P** mit Wasser. Typischerweise beträgt dabei der Anteil des Polymeren **P** 10 bis 90 Gewichts-%, insbesondere 20 bis 50 Gew.-%, bezogen auf das Gewicht der wässrigen Lösung oder Dispersion. Je nach Art des Polymers **P** entsteht eine Dispersion oder eine Lösung. Bevorzugt wird eine Lösung.

Die wässrige Lösung oder Dispersion kann weitere Bestandteile enthalten. Beispiele hierfür sind Lösungsmittel oder Additive, wie sie in der Bauchemie geläufig sind, insbesondere oberflächenaktive Stoffe, Stabilisatoren gegen Hitze

und Licht, Farbstoffe, Entschäumer, Beschleuniger, Verzögerer, Schaumbildner.

Das Polymer **P** verfügt über besonders gute Eigenschaft als Dispergiermittel, insbesondere als Verflüssiger, für Gipsuzammensetzungen, insbesondere für Zusammensetzungen umfassend Calciumsulfat-β-Halbhydrat zur Verwendung in Gips-Platten. Das heisst, dass die resultierende Mischung ein bedeutend grösseres Fliessverhalten aufweist im Vergleich zu einer Zusammensetzung ohne das Dispergiermittel, ohne dass das Erstarren deutlich verzögert wird. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten Gipszusammensetzung stark erhöht sind, und dass eine Prozessverbesserung bei der Herstellung der Gipszusammensetzungen, insbesondere der Gipsplatten, erreicht wird, da beispielsweise Zeit und Energie beim Trocknen der Gipsplatten gespart werden kann.

Das Polymer **P** hat somit als Dispergiermittel, insbesondere als Verflüssiger, hervorragende Eigenschaften in Systemen, welche überwiegend sulfatische Bindemittel, insbesondere überwiegend Calciumsulfat-β-Halbhydrat, enthalten. Zudem sind mit dem Polymer **P** Zusammensetzungen möglich, die sich nicht verfärben.

## Beispiele

Die Erfindung wird nun anhand von Beispielen näher erläutert.

### 1. Verwendete Polymere **P**

Tabelle 1 Verwendete Abkürzungen.

| Abkürzung | Bedeutung | Mw* |
|---|---|---|
| PEG1000 | Polyethylenglykol ohne terminale OH-Gruppen | 1000 g/mol |
| PEG3000 | Polyethylenglykol ohne terminale OH-Gruppen | 3000 g/mol |
| PEG5000 | Polyethylenglykol ohne terminale OH-Gruppen | 5000 g/mol |
| EO/PO(70/30)2000 | Block-Copolymer aus Ethylenoxid und Propylenoxid im Verhältnis 70:30 ohne terminale OH-Gruppen | 2000 g/mol |
| * Mw = mittleres Molekulargewicht | | |

Es wurden die in Tabelle 2 angegebenen Polymere **P-1**, **P-2** und **P-3** sowie die Vergleichsbeispiele **V1**, **V2** und **V3** mittels polymeranaloger Umsetzung aus Polyacrylsäure mit den korrespondierenden Alkoholen und/oder Aminen nach bekannter Art und Weise hergestellt. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen.

So wurde beispielsweise Polymer **P-2** mittels polymeranaloger Umsetzung folgendermassen hergestellt:

In einen Rundkolben mit mechanischem Rührer (IKA®-Rührwerk), Thermometer, Gaseinleitrohr und Destillationsbrücke wurden 145 g einer 40-prozentigen wässrigen Lösung (entspricht etwa 1 Mol Säureeinheiten) von Polyacrylsäure (PAS, mit einem mittleren Molekulargewicht $M_w$ von etwa 5000 g/mol) vorgelegt. Die Mischung wurde auf 50°C erwärmt und 300 g Polyethyleneglykol-Monomethylether (MPEG, mit einem mittleren Molekulargewicht $M_w$ von etwa 5000 g/mol) und 4 g Jeffamine® M-2070 zugegeben. Die Reaktionsmischung wurde unter $N_2$-Strom auf 175°C erwärmt. Das in der Mischung enthaltene Wasser sowie das Reaktionswasser wurden kontinuierlich unter $N_2$-Strom abdestilliert. Mit Erreichen der Temperatur wurden 3 g einer 66%igen Kalium-Acetat-Lösung zur Reaktionsmischung gegeben und ein Vakuum von 80 mbar angelegt. Nach 2 ½ Stunden ist ein vollständiger Reaktionsumsatz erreicht. Die Polymerschmelze wurde erstarren gelassen oder aber nach dem Abkühlen auf <100°C mit 550 g Wasser versetzt, um eine 40%ige Polymerlösung zu erhalten.

Die Polymere **P-1** und **P-3** sowie die Vergleichsbeispiele **V1 - V3** wurden in gleicher Weise wie Polymer **P-2** hergestellt.

Vergleichsbeispiel **V-4** ist ein kommerziell erhältlicher, auf Melamin Basis hergestellter Verflüssiger (beispielsweise Melment® F15G von BASF). Vergleichsbeispiel **V-5** ist ein kommerziell erhältlicher, auf Naphthalinsulfonat-Basis hergestellter Verflüssiger (beispielsweise Superplastyfikator CA40 von PCC Rokita SA, Polen). Beim sechsten Vergleichsbeispiel wurde kein Verflüssiger verwendet.

Tabelle 2 Erfindungsgemässe Polymere **P-1**, **P-2** und **P-3** bzw. Vergleichspolymere **V-1** bis **V-3** enthalten die Struktureinheiten **A** der Formel (I) und die Struktureinheiten **B** der Formel (II) mit $R^2$=H, $R^3$=H, $R^4$=COOM, $R^6$=H, M= $H^+$, $Na^+$;

| Nr. | $R^1$ | $R^5$ | | Mw | Mol-% | SG, mmol/ 1g Polymer |
|---|---|---|---|---|---|---|
| **P-1** | -H | -COO-PEG1000-CH3: -COO-PEG5000-CH3: -CO-NH-EO/PO(70/30)2000-CH3 | 41: 57.4: 1.6* | 50'000 | m = 87.8 n = 12.2 o = 0 | 1.845 |
| **P-2** | -H | -COO-PEG5000-CH3: | | 44'000 | m = 94.0 n = 6.0 o = 0 | 2.527 |
| **P-3** | -H | -CO-NH-EO/PO(70/30)2000-CH3 | | n.b. | m = 87.83 n = 12.17 o = 0 | 2.711 |
| **V-1** | -H | -COO-PEG1000-CH3: -CO-NH-EO/PO(70/30)2000-CH3 | 98.4: 1.6* | 31'500 | m = 87.8 n = 12.2 o = 0 | 4.480 |
| **V-2** | -H | -COO-PEG3000-CH3: -CO-NH-EO/PO(70/30)2000-CH3 | 99.5: 0.5* | 57'000 | m = 63.8 n = 36.2 o = 0 | 0.552 |
| **V-3** | -H | -COO-PEG1000-CH3: -CO-NH-EO/PO(70/30)2000-CH3 | 99.5: 0.5* | 37'000 | m = 63.8 n = 36.2 o = 0 | 1.463 |
| **SG** = Säuregehalt<br>* bedeutet Molverhältnis der verschiedenen $R^5$ Seitenketten n.b. bedeutet nicht bekannt | | | | | | |

2. Fliessverhalten im Calciumsulfat-β-Halbhydrat

Für einen Gipsslurry wurden 140 g Wasser mit 1 g einer 40-% igen Verflüssigerlösung (entspricht 0.2 Gew.-% Verflüssiger bezogen auf das Gesamtgewicht des Calciumsulfat-β-Halbhydrat) vorgelegt. Dann wurden 200 g Calciumsulfat-β-Halbhydrat, gegebenenfalls 0.2 g (0.1 Gew.-% bezogen auf das Gesamtgewicht des Calciumsulfat-β-Halbhydrates) eines Beschleunigers aus Calciumsulfat-Dihydrat, (beispielsweise erhältlich bei Fluka), beziehungsweise 4 g (2 Gew.-% bezogen auf das Gesamtgewicht des Calciumsulfat-β-Halbhydrates) eines Beschleunigers aus Kaliumsulfat (Fluka) enthaltend innerhalb von 15 Sekunden in das Wasser eingestreut und der Gipsslurry 15 Sekunden sumpfen gelassen. Anschliessend wurde 30 Sekunden von Hand intensiv gerührt. Der Minikonus mit einem Durchmesser von 50mm und einer Höhe von 51mm wurde gefüllt und nach 75 Sekunden das Ausbreitmass (ABM) in Millimeter bestimmt. Der Durchmesser des sich bildenden Gipskuchens wurde gemessen, sobald kein Fliessen mehr beobachtet wurde. Der Durchmesser in mm wurde als Ausbreitmass bezeichnet. Der Versteifungsbeginn und das Versteifungsende wurden mit der Messerschnittmethode nach DIN EN 13279-2 und der Daumendruckmethode bestimmt. Der Versteifungsbeginn (VB) ist erreicht, wenn nach einem Messerschnitt durch den Gips-Kuchen die Schnittränder nicht mehr zusammenlaufen. Das Versteifungsende ist eingetreten (VE), wenn bei einem Fingerdruck mit einem Druckaufwand von ca. 5 kg kein Wasser mehr aus dem Gips-Kuchen austritt.

Tabelle 3: Ausbreitmass (ABM) in mm und Versteifungsbeginn/-ende in Minuten (min) und Sekunden (sec)

| Verflüssiger | Beschleuniger | V-Beginn (min:sec) | V-Ende (min:sec) | ABM 2 min |
|---|---|---|---|---|
| ***ohne*** | - | 07:55 | 18:50 | 154 |
| ***P-1*** | - | 13:47 | 34:25 | 196 |

(fortgesetzt)

| Verflüssiger | Beschleuniger | V-Beginn (min:sec) | V-Ende (min:sec) | ABM 2 min |
|---|---|---|---|---|
| **P-2** | - | 15:42 | 40:00 | 198 |
| **P-3** | - | 19:00 | 43:00 | 186 |
| ***V-1*** | - | 43:30 | 79:20 | 169 |
| **V-2** | - | 07:40 | 19:20 | 146 |
| **V-3** | - | 11:25 | 27:40 | 173 |
| ***V-4*** | - | 07.55 | 20:30 | 172 |
| ***V-5*** | - | 07:20 | 18:20 | 176 |
| ***ohne*** | $CaSO_4$*$2H_2O$ | 02:00 | 05:00 | 93 |
| ***P-1*** | $CaSO_4$*$2H_2O$ | 03:49 | 09:30 | 177 |
| **P-2** | $CaSO_4$*$2H_2O$ | 03:45 | 09:27 | 175 |
| **P-3** | $CaSO_4$*$2H_2O$ | 04:00 | 10:20 | 170 |
| ***V-1*** | $CaSO_4$*$2H_2O$ | 09:15 | 15:55 | 170 |
| **V-2** | $CaSO_4$*$2H_2O$ | 02:00 | 05:55 | 97 |
| **V-3** | $CaSO_4$*$2H_2O$ | 03:00 | 07:75 | 164 |
| ***V-4*** | $CaSO_4$*$2H_2O$ | 02:15 | 05:55 | 125 |
| ***V-5*** | $CaSO_4$*$2H_2O$ | 02:10 | 06:00 | 140 |
| ***ohne*** | $K_2SO_4$ | 01:50 | 03:50 | 132 |
| ***P-1*** | $K_2SO_4$ | 04:00 | 08:00 | 200 |
| **P-2** | $K_2SO_4$ | 05:10 | 10:00 | 204 |
| ***V-1*** | $K_2SO_4$. | 08.40 | 13:30 | 168 |
| **V-2** | $K_2SO_4$ | 02:15 | 05:00 | 142 |
| **V-3** | $K_2SO_4$ | 03:40 | 07:00 | 182 |
| ***V-4*** | $K_2SO_4$ | 02:00 | 04:00 | 150 |
| ***V-5*** | $K_2SO_4$ | 02:00 | 04:20 | 166 |

Tabelle 3 zeigt, dass im reinen Gipsslurry aus Calciumsulfat-β-Halbhydrat das Ausbreitmass und somit die Verarbeitbarkeit und die Fliessfähigkeit der Gipszusammensetzungen, welche erfindungsgemäss die Polymere **P-1**, **P-2** und **P-3** enthalten, sehr gut ist. Um den Anforderungen in der Praxis besser gerecht zu werden, enthält eine Gipszusammensetzung in der Regel einen Beschleuniger. Es sind also insbesondere die Beispiele mit dem Beschleuniger interessant. Die erfindungsgemässen Zusammensetzungen mit den Polymeren **P1** bis **P3** weisen somit ein deutlich besseres Fliessverhalten als die Vergleichsbeispiele auf, ohne dass der Versteifungsbeginn oder das Versteifungsende zu stark verzögert wird.

Vergleichsbeispiel **V-1** enthält ein Polymer mit nur kurzen Seitenketten von 1000 g/mol. Vergleichsbeispiel **V-2** enthält ein Polymer mit einem zu tiefen Säuregehalt und Vergleichsbeispiel **V-3** enthält ein Polymer mit einem tiefen Säuregehalt und kurzen Seitenketten. Alle diese Eigenschaften führen zu einem reduzierten Ausbreitmass in einer Calciumsulfat-β-Halbhydrat Zusammensetzung. Auch bei den herkömmlichen Verflüssigern (Melment, **V-4** und Naphthalinsulfonat, **V-5**) ist insbesondere das Ausbreitmass reduziert gegenüber den erfindungsgemäss verwendeten Polymeren.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der durch die Ansprüche definierten Erfindung zu verlassen.

**Patentansprüche**

1. Verwendung mindestens eines Polymers **P** als Dispergiermittel für Gipszusammensetzungen, wobei das Polymer **P** umfasst:

a) eine Hauptkette enthaltend Kohlenwasserstoffgruppen,
b) mindestens eine Seitenkette umfassend mindestens eine Säuregruppe, ausgewählt aus der Gruppe bestehend aus Carbonsäuregruppe, Sulfonsäuregruppe, Phosphonsäuregruppe, Phosphorsäuregruppe oder ein Salz davon, und
c) mindestens eine Seitenkette mit einem Molekulargewicht $M_w$ von mindestens 1800 g/mol umfassend mindestens eine Polyoxyalkylengruppe, wobei die Polyoxyalkylengruppe über ein Verbindungsstück, welches mindestens eine Ester-, Amid- oder Imidgruppe umfasst, an die Hauptkette gebunden ist;

wobei das das Polymer **P** umfasst:

a. mindestens eine Säureeinheit **A** der Formel (I);

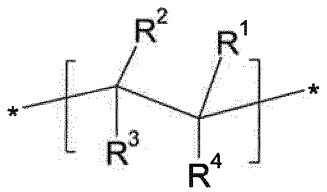

(I)

b. mindestens eine Struktureinheit B der Formel (II);

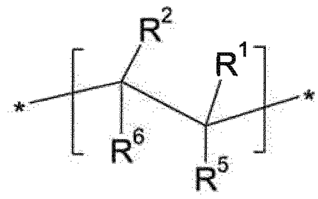

(II)

und gegebenenfalls
c. mindestens eine weitere Struktureinheit **C**;

wobei $R^1$ und $R^2$ je unabhängig voneinander für H, COOM, $CH_2COOM$ oder eine Alkylgruppe mit 1 bis 5 Kohlenstoffatomen stehen,
wobei $R^3$ unabhängig voneinander für H, $CH_3$, COOM oder $CH_2COOM$ steht; und
wobei $R^4$ unabhängig voneinander für einen Rest der Carbonsäure, Sulfonsäure, Phosphorsäure oder Phosphonsäure oder einem Salz davon steht;
oder wobei $R^3$ mit $R^4$ einen Ring bildet zu -CO-O-CO-;
wobei M für H, Alkalimetall, Erdalkalimetall, Ammonium, Ammoniumkation, oder Mischungen davon steht;
wobei $R^5$ unabhängig voneinander für einen Rest der Formel (III) steht

$$-(CH_2)_x-R^7-(R^8O)_y-R^9 \qquad \text{(III)}$$

wobei $R^7$ für ein Ester-, Amid- oder Imid-Verbindungsstück, vorzugsweise für -COO- oder -CO-NH- steht;
wobei $R^8$ für eine $C_2$ - $C_6$ Alkylengruppe, vorzugsweise eine $C_2$ - $C_4$ Alkylengruppe oder eine Mischung davon steht,
wobei $R^9$ für H, einen $C_1$ - $C_{12}$ Alkyl- oder Cycloalkylrest, einen $C_7$ - $C_{20}$ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei x unabhängig voneinander für den Wert 0 oder 1 stehen;
wobei y unabhängig voneinander für den Wert 40 - 250 steht;

und wobei $R^6$ unabhängig voneinander für H, $CH_3$, COOM, $CH_2COOM$ oder einen Substituenten wie für $R^5$ definiert steht;
und wobei der Säuregehalt des Polymers 1.8 bis 2.7 mmol Säuregruppen pro 1 g Polymer beträgt, wobei sich der Säuregehalt **SG** in mmol/g Polymer berechnet nach der Formel

$$\left(\frac{z*m}{(M_{WA}*m+M_{WB}*n+M_{WC}*o)}\right)*1000,$$

wobei z der Zahl der Protonen entspricht, welche die Säureeinheit **A** der Formel (I) abzugeben vermag;
$M_w$ das Molekulargewicht der jeweiligen Säure- oder Struktureinheit(en) ist;
und m den Anteil der Säureeinheit **A** der Formel (I) in Mol% am Polymer **P**,
n den Anteil der Struktureinheit **B** der Formel (II) in Mol% am Polymer **P** und
o den Anteil der gegebenenfalls umfassten Struktureinheit **C** in Mol% am Polymer **P** angibt;

und wobei das Polymer **P** erhältlich ist durch oder hergestellt wird mittels polymeranaloger Reaktion der Veresterung und/oder Amidierung einer Polycarbonsäure.

2. Verwendung eines Polymers **P** gemäss Anspruch 1, **dadurch gekennzeichnet, dass** die Gipszusammensetzung mindestens 30 Gew.-%, bevorzugt mindestens 70 Gew.-% Gips enthält, bezogen auf das Gesamtgewicht des Bindemittels.

3. Verwendung eines Polymers **P** gemäss Anspruch 1 oder 2, **dadurch gekennzeichnet, dass** Gips Calciumsulfat-β-Halbhydrat bedeutet.

4. Verwendung eines Polymers **P** gemäss einem der vorhergehenden Ansprüche, **dadurch gekennzeichnet, dass** die Säuregruppe eine Carbonsäuregruppe ist.

5. Verwendung eines Polymers **P** gemäss einem der vorhergehenden Ansprüche, **dadurch gekennzeichnet, dass** die mindestens eine Polyoxyalkylengruppe eine Polyoxyethylengruppe ist oder umfasst.

6. Verwendung eines Polymers **P** gemäss Anspruch 1, **dadurch gekennzeichnet, dass** $R^1$, $R^2$, $R^3$ und $R^6$ für H und $R^4$ für COOM steht.

7. Verwendung eines Polymers **P** gemäss einem der Ansprüche 1 oder 6, **dadurch gekennzeichnet dass**, x für 0 steht.

8. Verwendung gemäss einem der Ansprüche 1 oder 6 bis 7, **dadurch gekennzeichnet, dass** das Polymer **P** 50 bis 99.5 Mol-%, vorzugsweise 70 bis 99 Mol-% der Säureeinheit **A** der Formel (I), 0.5 bis 50 Mol-%, vorzugsweise 1 bis 30 Mol-% der Struktureinheit **B** der Formel (II), und gegebenenfalls 0 bis 49 Mol-% der Struktureinheit **C** umfasst, jeweils bezogen auf die Gesamtmolmenge der Struktureinheiten von **A, B** und **C** im Polymer **P**.

9. Verwendung eines Polymers **P** gemäss einem der vorhergehenden Ansprüche zur Herstellung von Gipsplatten, insbesondere Gipskartonplatten.

10. Bindemittel enthaltendes Gemisch umfassend mindestens 30 Gew.-%, Gips, bezogen auf das Gesamtgewicht des Bindemittels und mindestens ein Polymer **P** wie in einem der vorhergehenden Ansprüche definiert.

11. Verfahren zur Herstellung eines Bindemittel enthaltenden Gemisches gemäss Anspruch 10, **dadurch gekennzeichnet, dass** das Polymer **P** getrennt oder als Zusatzmittel vorgemischt in fester oder flüssiger Form dem Bindemittel zugegeben wird.

## Claims

1. Use of at least one polymer **P** as a dispersant for gypsum compositions, wherein the polymer **P** includes:

a) a main chain containing hydrocarbon groups,
b) at least one side chain including at least one acid group, selected from the group consisting of a carboxylic acid group, a sulfonic acid group, a phosphonic acid group, a phosphoric acid group, or a salt thereof, and
c) at least one side chain with a molecular weight $M_w$ of at least 1800 g/mol, including at least one polyoxyalkylene group, where the polyoxyalkylene group is connected to the main chain through a linkage including at least one ester, amide, or imide group;

wherein the polymer **P** includes:

a) at least one acid unit **A** of formula (I);

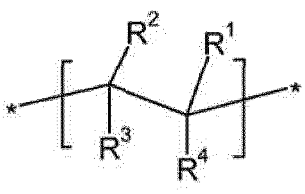

**(I)**

b) at least one structural unit **B** of formula (II);

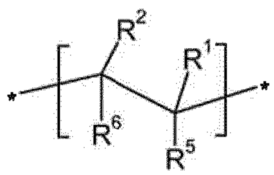

**(II)**

and optionally
c) at least one additional structural unit **C**;

where $R^1$ and $R^2$ each independently stand for H, COOM, $CH_2COOM$ or an alkyl group with 1 to 5 carbon atoms,
where $R^3$ independently stands for H, $CH_3$, COOM, or $CH_2COOM$; and
where $R^4$ independently stands for a radical of carboxylic acid, sulfonic acid, phosphoric acid, or phosphonic acid or a salt thereof;
or where $R^3$ forms a ring with $R^4$, to form -CO-O-CO-;
where M stands for H, alkali metal, alkaline earth metal, ammonium, ammonium cation, or mixtures thereof;
where $R^5$ independently stands for a radical of formula (III)

$$-(CH_2)_x-R^7-(R^8O)_y-R^9 \qquad \textbf{(III)}$$

where $R^7$ stands for an ester, amide, or imide linkage, preferably for -COO- or -CO-NH-;
where $R^8$ stands for a $C_2$-$C_6$ alkylene group, preferably a $C_2$-$C_4$ alkylene group or a mixture thereof,
where $R^9$ stands for H, a $C_1$-$C_{12}$ alkyl or cycloalkyl radical, a $C_7$-$C_{20}$ alkylaryl or aralkyl radical, or a substituted or unsubstituted aryl radical, or a monovalent organic radical with 1 to 30 C atoms, which optionally includes heteroatoms;
where x independently stand for the number 0 or 1;
where y independently stands for the number 40-250;
and where $R^6$ independently stands for H, $CH_3$, COOM, $CH_2COOM$, or a substituent such as defined for $R^5$;

and where the acid content of the polymer is 1.8 to 2.7 mmol acid groups per gram of polymer,
where the acid content **SG** in mmol/g of polymer is calculated from the formula

$$\left(\frac{z*m}{(M_{WA}*m+M_{WB}*n+M_{WC}*o)}\right)*1000,$$

where z corresponds to the number of protons which the acid unit **A** of formula (I) is able to give up; $M_w$ is the molecular weight of the respective acid or structural unit(s);
and *m* describes the proportion of the acid unit **A** of formula (I) in mol% in polymer **P**,
n describes the proportion of the structural unit **B** of formula (II) in mol% in polymer **P**, and
*O* describes the proportion of the optionally included structural unit **C** in mol% in polymer **P;**
and wherein the polymer **P** is obtainable by or is prepared by means of a polymer-analogous reaction of esterification and/or amidation of a polycarboxylic acid.

**2.** Use of a polymer **P** as in Claim 1, **characterized in that** the gypsum composition contains at least 30 wt.%, preferably at least 70 wt.% gypsum, relative to the total weight of the binder.

**3.** Use of a polymer **P** as in Claim 1 or Claim 2, **characterized in that** gypsum means calcium sulfate β-hemihydrate.

**4.** Use of a polymer **P** as in any one of the preceding claims, **characterized in that** the acid group is a carboxylic acid group.

**5.** Use of a polymer **P** as in any one of the preceding claims, **characterized in that** the at least one polyoxyalkylene group is or includes a polyoxyethylene group.

**6.** Use of a polymer **P** as in Claim 1, **characterized in that** $R^1$, $R^2$, $R^3$, and $R^6$ stand for H and $R^4$ stands for COOM.

**7.** Use of a polymer **P** as in either of Claims 1 and 6, **characterized in that** x stands for 0.

**8.** Use as in any one of Claims 1, 6 or 7, **characterized in that** the polymer **P** includes 50 to 99.5 mol%, preferably 70 to 99 mol% of acid unit **A** of formula (I), 0.5 to 50 mol%, preferably 1 to 30 mol% of structural unit **B** of formula (II), and optionally 0 to 49 mol% of structural unit **C**, respectively relative to the total molar amount of structural units **A**, **B**, and **C** in polymer **P**.

**9.** Use of a polymer **P** as in any one of the preceding claims to manufacture gypsum plasterboard panels, in particular gypsum cardboard panels.

**10.** Mixture containing a binder including at least 30 wt.% gypsum, relative to the total weight of the binder, and at least one polymer **P** as defined in any one of the preceding claims.

**11.** Method for preparation of a mixture containing a binder as in Claim 10, **characterized in that** the polymer **P** is added to the binder separately or as an additive premixed in solid or liquid form.

## Revendications

**1.** Utilisation d'au moins un polymère P comme dispersant pour des compositions à base de plâtre, le polymère P comprenant :

a) une chaîne principale contenant des groupes hydrocarbonés,
b) au moins une chaîne latérale comprenant au moins un groupe acide, choisi dans le groupe constitué par un groupe acide carboxylique, un groupe acide sulfonique, un groupe acide phosphonique, un groupe acide phosphorique ou un sel de ceux-ci et
c) au moins une chaîne latérale présentant un poids moléculaire $M_w$ d'au moins 1800 g/mole comprenant au moins un groupe polyoxyalkylène, le groupe polyoxyalkylène étant lié à la chaîne principale via une partie de liaison, qui comprend au moins un groupe ester, amide ou imide ;

le polymère P comprenant :

a. au moins une unité acide A de formule (I) ;

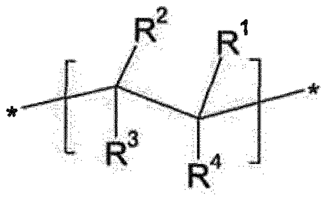

(I)

b. au moins une unité structurale B de formule (II) ;

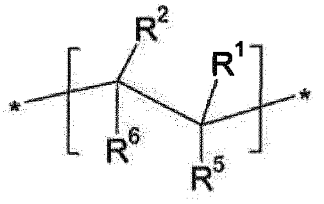

(II)

et le cas échéant
c. au moins une unité structurale C ;

$R^1$ et $R^2$ représentant, chacun indépendamment l'un de l'autre, H, COOM, $CH_2COOM$ ou un groupe alkyle comprenant 1 à 5 atomes de carbone,
$R^3$ représentant, indépendamment, H, $CH_3$, COOM ou $CH_2COOM$ ; et
$R^4$ représentant, indépendamment, un radical d'acide carboxylique, d'acide sulfonique, d'acide phosphorique ou d'acide phosphonique ou d'un sel de ceux-ci ;
ou $R^3$ formant, avec $R^4$, un cycle en -CO-O-CO- ;
M représentant H, métal alcalin, métal alcalino-terreux, ammonium, cation d'ammonium ou des mélanges de ceux-ci ;
$R^5$ représentant, indépendamment, un radical de formule (III)

$$-(CH_2)_x-R^7-(R^8O)_y-R^9 \qquad \text{(III)}$$

$R^7$ représentant une partie de liaison à fonction ester, amide ou imide, de préférence -COO- ou -CO-NH- ;
$R^8$ représentant un groupe $C_2$-$C_6$-alkylène, de préférence un groupe $C_2$-$C_4$-alkylène ou un mélange de ceux-ci,
$R^9$ représentant H, un radical $C_1$-$C_{12}$-alkyle ou $C_1$-$C_{12}$-cycloalkyle, un radical $C_7$-$C_{20}$-alkylaryle ou aralkyle, ou un radical aryle substitué ou non substitué, ou un radical organique monovalent comprenant 1 à 30 atomes de carbone, qui comprend le cas échéant des hétéroatomes ;
x représentant, indépendamment, la valeur 0 ou 1 ;
y représentant, indépendamment, la valeur 40-250 ;
$R^6$ représentant, indépendamment, H, $CH_3$, COOM, $CH_2COOM$ ou un substituant comme défini pour $R^5$ ;
la teneur en acide du polymère étant de 1,8 à 2,7 mmoles de groupes acides par 1 g de polymère, la teneur en acide SG en mmoles/g de polymère étant calculée selon la formule

$$\left(\frac{z*m}{(M_{WA}*m+M_{WB}*n+M_{WC}*o)}\right)*1000,$$

z correspondant au nombre de protons que l'unité acide A de formule (I) peut donner ;
$M_w$ représentant le poids moléculaire de chaque unité acide ou structurale ;
et m indiquant la proportion d'unité acide A de formule (I) en % en mole par rapport au polymère P,
n indiquant la proportion d'unité acide B de formule (II) en % en mole par rapport au polymère P, et
O indiquant la proportion d'unité structurale C éventuellement comprise en % en mole par rapport au polymère P ;
le polymère P pouvant être obtenu ou préparé au moyen d'une réaction d'estérification et/ou d'amidation d'un poly(acide carboxylique) analogue à un polymère.

2. Utilisation d'un polymère P selon la revendication 1, **caractérisée en ce que** la composition à base de plâtre contient

au moins 30% en poids, de préférence au moins 70% en poids de plâtre, par rapport au poids total du liant.

**3.** Utilisation d'un polymère P selon la revendication 1 ou 2, **caractérisée en ce que** plâtre signifie l'hémi-hydrate de sulfate de calcium de forme ß.

**4.** Utilisation d'un polymère P selon l'une quelconque des revendications précédentes, **caractérisée en ce que** le groupe acide est un groupe acide carboxylique.

**5.** Utilisation d'un polymère P selon l'une quelconque des revendications précédentes, **caractérisée en ce que** ledit au moins un groupe polyoxyalkylène est ou comprend un groupe polyoxyéthylène.

**6.** Utilisation d'un polymère P selon la revendication 1, **caractérisée en ce que** $R^1$, $R^2$, $R^3$ et $R^6$ représentent H et $R^4$ représente COOM.

**7.** Utilisation d'un polymère P selon l'une quelconque des revendications 1 ou 6, **caractérisée en ce que** x représente 0.

**8.** Utilisation selon l'une quelconque des revendications 1 ou 6 à 7, **caractérisée en ce que** le polymère P comprend 50 à 99,5% en mole, de préférence 70 à 99% en mole de l'unité acide A de formule (I), 0,5 à 50% en mole, de préférence 1 à 30% en mole de l'unité structurale B de formule (II) et éventuellement 0 à 49% en mole de l'unité structurale C, à chaque fois par rapport à la quantité molaire totale des unités structurales A, B et C dans le polymère P.

**9.** Utilisation d'un polymère P selon l'une quelconque des revendications précédentes pour la préparation de plaques de plâtre, en particulier de plaques de plâtre cartonnées.

**10.** Mélange contenant un liant, comprenant au moins 30% en poids de plâtre, par rapport au poids total du liant, et au moins un polymère P tel que défini dans l'une quelconque des revendications précédentes.

**11.** Procédé pour la préparation d'un mélange contenant un liant selon la revendication 10, **caractérisé en ce que** le polymère P est ajouté séparément ou sous forme prémélangée comme additif, sous forme solide ou liquide, au liant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 02081400 A1
- FR 2827593
- WO 9735814 A1
- WO 9509821 A2
- DE 10015135 A1
- EP 1138697 A1
- EP 1348729 A1
- WO 2005090416 A1
- EP 1138697 B1
- EP 1061089 B1